# FASCICULE DE BREVET EUROPEEN

(11) **EP 3 274 200 B1**
(45) Date de publication et mention de la délivrance du brevet: **04.08.2021**
(21) Numéro de dépôt: 16711321.6
(22) Date de dépôt: 23.03.2016
(51) Int. Cl.: B60H 1/00

(54) **DISPOSITIF DE CHAUFFAGE, VENTILATION ET/OU CLIMATISATION POUR VEHICULE AUTOMOBILE**
HEIZUNGS-, LÜFTUNGS- UND/ODER KLIMATISIERUNGSVORRICHTUNG FÜR EIN KRAFTFAHRZEUG
HEATING, VENTILATION AND/OR AIR CONDITIONING DEVICE FOR A MOTOR VEHICLE

(30) Priorité: 24.03.2015 FR 1552450; 24.03.2015 FR 1552452
(43) Date de publication de la demande: 31.01.2018
(73) Titulaire: Valeo Systemes Thermiques, 78320 Le Mesnil Saint Denis (FR)
(72) Inventeur: PIERRES, Philippe, 78322 Le Mesnil Saint-Denis cédex (FR); LISKA, Jan, 10800 Prague (CZ)
(74) Mandataire: Tran, Chi-Hai
(86) Numéro de dépôt international: PCT/EP2016/056469
(87) Numéro de publication internationale: WO 2016/151057

(56) Documents cités:
- EP-A1- 0 641 682
- EP-A1- 1 792 760
- EP-A1- 2 138 335
- FR-A1- 2 942 996
- JP-A- 2004 122 813
- US-A1- 2010 006 258

## Description

### Domaine Technique de l'invention

La présente invention concerne le domaine des dispositifs de chauffage, ventilation et/ou climatisation pour véhicule automobile.

### Etat de la technique antérieur

Un véhicule automobile est couramment équipé d'un dispositif de ventilation, de chauffage et/ou de climatisation pour réguler les paramètres aérothermiques d'un flux d'air distribué vers l'intérieur de l'habitacle du véhicule. Le dispositif comprend généralement un boîtier délimité par des cloisons dans lesquelles sont ménagées des ouvertures, dont au moins une entrée d'air et au moins une sortie d'air.

Un dispositif de type connu est décrit par le document JP 2004 122813 A, avec un premier et un second chemin de contournement de l'échangeur de chaleur, et deux volets de type différent, lesdits volets étant commandés de façon sychronisée ou non, en fonction de l'utilisation du dispositif. De façon connue, le boîtier loge un pulseur pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle. A titre d'exemple, les moyens de traitement thermique peuvent comprendre un évaporateur qui est destiné à refroidir et déshumidifier le flux d'air le traversant, ainsi qu'un radiateur, éventuellement associé à un radiateur additionnel, qui est destiné à réchauffer le flux d'air qui le traverse.

Il est connu, dans ces dispositifs, d'avoir un évaporateur disposé en aval de l'entrée d'air, de sorte que la totalité du flux d'air entrant à l'intérieur du boîtier soit déshumidifié par l'évaporateur. Puis, le flux d'air froid ainsi généré est admis dans une chambre de mixage principale et/ou orienté vers un organe de chauffage, notamment un radiateur et éventuellement un radiateur additionnel, pour obtenir un flux d'air chaud. La chambre de mixage principale sert à mélanger un ou plusieurs flux d'air froid et/ou chaud de sorte que le flux d'air issu du mélange, ayant la température de consigne souhaitée, soit distribué vers des zones spécifiques de l'habitacle du véhicule automobile. La chambre de mixage principale est pourvue d'un premier organe de mixage afin de définir la proportion du flux d'air froid et du flux d'air chaud issu de la chambre de chauffage pénétrant dans la chambre de mixage principale. Cet organe permet ainsi d'ajuster la température du flux d'air mélangé destiné à être distribué dans la(es) zone(s) dédiées de l'habitacle, comme par exemple les zones avant et arrière. Toutefois, il est également souhaitable de prévoir une possibilité de gérer thermiquement les différentes zones du véhicule de manière indépendante (mode multi-zone), notamment pour les véhicules haut de gamme. Pour ce faire, le boîtier loge également une chambre de mixage secondaire destinée à générer un flux d'air secondaire pour aérer une ou plusieurs autres zones de l'habitacle. La chambre de mixage secondaire est aussi en communication aéraulique avec l'organe de chauffage et apte à recevoir tout ou une partie du flux d'air ayant traversé l'évaporateur du dispositif de chauffage, de ventilation et/ou de climatisation. La chambre de mixage secondaire est équipée d'un deuxième organe de mixage afin de définir la proportion du flux d'air froid et du flux d'air chaud pénétrant dans la chambre de mixage secondaire pour ajuster la température du flux d'air distribué dans les autres zones du véhicule.

Ainsi, avec un tel dispositif de chauffage, ventilation et/ou climatisation il est donc possible de gérer thermiquement différentes zones du véhicule de manière indépendante. Toutefois, si on souhaite fonctionner selon un mode mono-zone ou bi-zone uniquement, (à savoir l'intégralité de l'habitacle est traitée à une même température pour ces deux modes), le dispositif décrit précédemment est peu adapté puisqu'il exploite deux organes de distribution ce qui entraîne une cinématique complexe et onéreuse. Une première solution serait de modifier l'architecture du dispositif et de ne conserver qu'une seule chambre de mixage. Toutefois, par souci de standardisation, il est plus intéressant industriellement d'avoir un même dispositif de chauffage, ventilation et/ou climatisation qui puisse s'adapter à un fonctionnement mono-zone, bi-zone ou multizone. Cela implique de simplifier la cinématique du dispositif de chauffage, ventilation et/ou climatisation pour avoir une utilisation optimale quelque soit le mode de fonctionnement souhaité.

### Exposé de l'invention

La présente invention vise à optimiser la cinématique d'un dispositif de chauffage, ventilation et/ou climatisation dans le cadre d'un traitement thermique pour une ou deux zones du véhicule.

Pour cela, l'invention propose un dispositif de chauffage, ventilation et/ou climatisation pour véhicule automobile, comprenant un boîtier comprenant:
- un premier échangeur de chaleur,
- un canal d'écoulement d'un flux d'air où est agencé le premier échangeur de chaleur,
- un premier chemin de contournement du premier échangeur de chaleur,
- un premier volet et un deuxième volet obstruant au moins partiellement le canal d'écoulement du flux d'air, lesdits volets étant situés à proximité du premier échangeur de chaleur, et toutes les caractéristiques de la revendication 1.

Selon l'invention, le premier volet est de type coulissant tandis que le deuxième volet est d'un type différent dudit premier volet.

De cette manière, l'invention permet d'avoir un dispositif de chauffage, ventilation et/ou climatisation moins encombrant que ceux de l'art antérieur. En utilisant un deuxième volet d'un type autre que le premier volet coulissant, on s'assure ainsi une cinématique de liaison des deux volets au sein du dispositif de chauffage, ventilation et/ou climatisation simple tout en garantissant un gain de place. Il y a ainsi une synergie dans l'utilisation de ces deux volets qui permet de faire un compromis avantageux entre les gènes stériques et la cinématique du dispositif.

En outre le dispositif selon l'invention comprend un mécanisme de synchronisation desdits volets.

De cette manière, l'invention permet d'avoir un dispositif de chauffage, ventilation et/ou climatisation adapté pour un fonctionnement aussi bien à plusieurs zones qu'à un fonctionnement mono-zone ou bi-zone. Le mécanisme de synchronisation garantit que les volets se déplacent simultanément de manière à obtenir une même température de consigne dans les deux chambres de mixage.

L'invention prévoit en outre que :
- le mécanisme de synchronisation est logé à l'intérieur du boîtier ;
- un deuxième échangeur de chaleur est agencé en amont, par rapport à la direction de l'écoulement du flux d'air, du premier échangeur de chaleur ;
- le premier volet comprend un engrenage en interaction avec au moins une crémaillère ;
- le deuxième volet est de type tambour ;
- le dispositif comprend un second chemin de contournement du premier échangeur de chaleur, le second chemin de contournement étant agencé à distance du premier chemin de contournement ;
- le premier volet est disposé au niveau du premier chemin de contournement et le deuxième volet est disposé au niveau du deuxième chemin de contournement ;
- le dispositif comprend un élément de séparation agencé entre lesdits chemins de contournement du premier échangeur de chaleur, comprenant des moyens de réception aptes à accueillir le premier volet et le deuxième volet ;
- lesdits échangeurs de chaleurs sont agencés de manière sensiblement parallèle ;
- lesdits chemins de contournements sont agencés de part et d'autre du premier échangeur de chaleur.

Un mode de réalisation particulier selon l'invention propose que le mécanisme de synchronisation comprend au moins une bielle mobile.

### Brève description des figures

D'autres caractéristiques et avantages de l'invention ressortiront à la lecture de la description qui suit, en référence aux figures annexées, qui illustrent :
- La figure 1 illustre une vue de profil du dispositif de chauffage, ventilation et/ou climatisation selon l'invention ;
- La figure 2 illustre une vue agrandie du mécanisme de synchronisation selon l'invention.

### Description détaillée des modes de réalisation

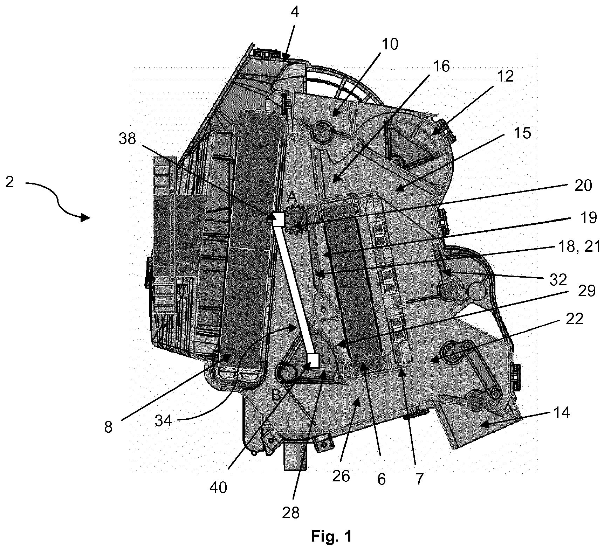

Pour obtenir un dispositif de chauffage, ventilation et/ou climatisation avec un faible encombrement stérique tout en ayant une cinématique simple, l'invention telle qu'illustrée à la figure 1, propose un dispositif 2 de chauffage, ventilation et/ou climatisation comprenant un boîtier 4 définissant un canal 3 d'écoulement d'un flux air dans lequel sont logés des moyens de traitement thermique du flux d'air destiné à être distribué dans l'habitacle.

Les moyens de traitement thermique comprennent un premier échangeur de chaleur 6, par exemple un radiateur, destiné à réchauffer une partie du flux d'air circulant dans le dispositif 2 de chauffage, ventilation et/ou climatisation. Le premier échangeur de chaleur 6 peut éventuellement être couplé à un radiateur électrique 7 additionnel destiné à réchauffer le flux d'air de manière plus rapide, notamment dans le cas d'un démarrage du véhicule.

Les moyens de traitement thermique comprennent également un deuxième échangeur de chaleur 8, par exemple un évaporateur, agencé en amont par rapport à la direction de l'écoulement du flux d'air du premier échangeur de chaleur 6. Le deuxième échangeur de chaleur 8 est destiné à refroidir et déshumidifier l'intégralité du flux d'air circulant dans le dispositif de chauffage. Le flux d'air est introduit dans le boîtier 4 par une entrée (non illustrée) puis est dirigé vers une sortie, après avoir été traité thermiquement par les échangeurs de chaleur 6, 7, 8, par l'intermédiaire d'un pulseur (non illustré). La sortie comprend plusieurs conduits distribuant les flux d'air vers des buses débouchant dans l'habitacle avec notamment le conduit 10 menant le flux d'air pour la buse de dégivrage permettant de désembuer le pare-brise, le conduit 12 menant le flux d'air vers la buse de ventilation latéraux/centraux permettant de refroidir/réchauffer les passagers du véhicule, ainsi que le conduit 14 orientant le flux d'air vers la buse pied permettant de réchauffer les pieds des passagers avant du véhicule. Afin de pouvoir distribuer les flux d'air vers les buses aux températures souhaitées, le dispositif 2 de chauffage, ventilation et climatisation comprend une première zone de mixage 15 où un flux d'air chaud et un flux d'air froid, issus respectivement des échangeurs de chaleur 6 et 8, sont mélangés dans des proportions variables puis acheminés vers les buses débouchant dans l'habitacle.

Pour garantir que le flux d'air froid, issu du deuxième échangeur de chaleur 8, ne soit pas thermiquement contaminé par le premier échangeur de chaleur 6, le dispositif 2 comprend un premier chemin de contournement 16 du premier échangeur de chaleur 6. Ainsi, le flux d'air froid, ayant traversé le deuxième échangeur de chaleur 8, circule soit à travers le premier échangeur de chaleur 6 pour être réchauffé, soit contourne le premier échangeur de chaleur 6 par le premier chemin de contournement 16 pour conserver sa température basse. Les deux flux d'air chaud et froid sont orientés en direction de la première zone de mixage 15 pour y être mélangés et distribués vers les buses de sortie aux températures consignées. Pour réaliser ce mélange dans des proportions variables, le dispositif 2 comprend un premier volet 18 permettant de réguler la proportion de flux d'air froid passant par le premier échangeur de chaleur 6 et la proportion de flux d'air froid passant par le premier chemin de contournement 16.

Le premier volet 18 est de type coulissant et comprend une porte 21 sur laquelle est agencée une crémaillère. Afin de mettre le premier volet 18 en mouvement, un engrenage 20 complémentaire à la crémaillère est mis en rotation autour d'un axe A par un actionneur non illustré. La rotation de l'engrenage entraîne le mouvement en translation de la porte 21 entre deux positions extrêmes, une position où le premier volet 18 bloque l'accès du flux d'air froid au premier chemin de contournement 16 et une position où le premier volet bloque l'accès du flux d'air froid au premier échangeur de chaleur 6. L'accès du flux d'air froid au premier échangeur de chaleur 6, est réalisé par l'intermédiaire d'un couloir 19 correspondant à une portion du canal 3 d'écoulement d'un flux d'air situé entre un élément de séparation 30, qui sera décrit ultérieurement, et le premier échangeur de chaleur 6.

Selon le positionnement du premier volet 18, le flux d'air froid issu du deuxième échangeur de chaleur 8 est orienté, dans des proportions variables, vers le premier échangeur de chaleur 6 et/ou directement vers la première zone de mixage 15. Selon la configuration telle que illustrée à la figure 1, le flux d'air froid est directement et intégralement orienté vers la première zone de mixage 15 puis vers les conduits 10, 12, 14 de sortie.

Un tel dispositif est adapté pour un traitement thermique homogène où les différentes zones du véhicule sont aérées à une même température.

Toutefois, si on souhaite avoir une distinction de température entre deux zones du véhicule, comme par exemple l'avant et l'arrière de l'habitacle, il convient de rajouter une seconde zone de mixage 22. La seconde zone de mixage 22, de manière analogue à la première zone de mixage 15, permet aux flux d'air chaud et froid, issus respectivement des échangeurs de chaleur 6 et 8, d'être mélangés dans des proportions variables puis acheminés vers au moins une buse débouchant dans la zone de l'habitacle appropriée par l'intermédiaire d'un conduit 24. Ainsi avec un tel dispositif 2 de chauffage, ventilation et/ou climatisation, il est possible de traiter thermiquement plusieurs zones de l'habitacle à des températures différentes. Par souci de standardisation du dispositif de chauffage, ventilation et/ou climatisation selon l'invention, il est prévu un mécanisme de synchronisation 34, qui sera décrit ultérieurement, permettant de garantir une température homogène dans les deux zones de mixage 15, 22. On obtient ainsi un même dispositif de chauffage, ventilation et/ou climatisation apte à être installé dans une large gamme de véhicules plutôt que de fabriquer deux dispositifs différents pour chaque type de véhicule.

Tout comme pour la première zone de mixage 15, pour garantir que le flux d'air froid, issu du deuxième échangeur de chaleur 8, ne soit pas thermiquement contaminé par le premier échangeur de chaleur 6, ledit dispositif 2 comprend un deuxième chemin de contournement 26 du premier échangeur de chaleur 6, le deuxième chemin de contournement 26 étant agencé à distance du premier chemin de contournement 16. Ainsi, le flux d'air froid, ayant traversé le deuxième échangeur de chaleur 8, circule soit à travers le premier échangeur de chaleur 6 pour être réchauffé, soit contourne le premier échangeur de chaleur 6 par le deuxième chemin de contournement 26 pour conserver sa température basse. Les deux flux d'air chaud et froid sont orientés en direction de la deuxième zone de mixage 22 pour y être mélangés et distribués vers les buses de sortie de la zone du véhicule appropriée aux températures consignées. Pour réaliser ce mélange dans des proportions variables, le dispositif 2 comprend un deuxième volet 28 permettant de réguler la proportion de flux d'air froid passant par le premier échangeur de chaleur 6 et la proportion de flux d'air froid passant par le deuxième chemin de contournement 26.

Le deuxième volet 28 est d'un type différent que le premier volet 18. Tel qu'illustré sur le mode de réalisation de la figure 1, le deuxième volet 28 correspond à un volet tambour et se déplace entre deux positions extrêmes, une position où le deuxième volet 28 bloque l'accès du flux d'air froid au deuxième chemin de contournement 26 et une position où le deuxième volet bloque l'accès du flux d'air froid au premier échangeur de chaleur 6. L'accès du flux d'air froid au premier échangeur de chaleur 6, est réalisé par l'intermédiaire d'un couloir 29 correspondant à une autre portion du canal 3 d'écoulement d'un flux d'air situé entre un élément de séparation 30, qui sera décrit ultérieurement, et le premier échangeur de chaleur 6. Bien évidemment, tout autre type de volet tel qu'un volet drapeau ou papillon convient au dispositif 2 selon l'invention.

Selon un mode de réalisation non illustré, afin de mettre le deuxième volet 28 en mouvement, un actionneur non illustré met en rotation le deuxième volet 28 autour d'un axe B entre deux positions extrêmes, une position où le deuxième volet 28 bloque l'accès du flux d'air froid au deuxième chemin de contournement 26 et une position où le deuxième volet bloque l'accès du flux d'air froid au premier échangeur de chaleur 6. Ici aussi l'accès du flux d'air froid au premier échangeur de chaleur est réalisé par l'intermédiaire d'un couloir 29 correspondant à une autre portion du canal 3 d'écoulement d'un flux d'air situé entre l'élément de séparation 30, qui sera décrit ultérieurement, et le premier échangeur de chaleur 6.

Pour obtenir une même température dans les deux zones de mixage 15, 22, un mécanisme de synchronisation 34 des deux volets 18, 28 est prévu. Ainsi, le mécanisme de synchronisation 34 garantit que si le premier volet 18 force l'écoulement du flux d'air froid à travers le premier chemin de contournement 16, dans cette configuration, le deuxième volet 28 forcera également l'écoulement du flux d'air froid à travers le deuxième chemin de contournement 26 tel qu'illustré à la figure 1. Dans ce cas de réalisation, les deux chambres de mixage 15, 22 contiennent de l'air froid directement issu du deuxième échangeur de chaleur 8, les zones de l'habitacle seront alors alimentées en air à une même température, ici basse.

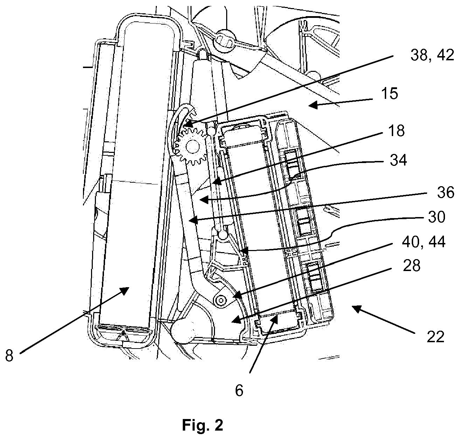

La figure 2 est une illustration en détail du mécanisme de synchronisation logé à l'intérieur du boîtier 4 du dispositif 2 de chauffage, ventilation et/ou climatisation. Le mécanisme de synchronisation 34 comprend une bielle mobile 36 ayant à chaque extrémité un moyen de liaison 38, 40 apte à relier la bielle 36 respectivement à chaque volet 18, 28. Le moyen de liaison 38 relie le premier volet 18 à la bielle 36 et le moyen de liaison 40 relie le deuxième volet 28 à la bielle 36. Le moyen de liaison 38 tel qu'illustré à la figure 2 comprend une crémaillère 42 attachée à la bielle 36 et de forme complémentaire à l'engrenage 20 actionnant le premier volet 18. Ainsi, l'engrenage 20 en pivotant autour de l'axe A entraîne la translation simultanée de la crémaillère située sur le premier volet 18 et de la crémaillère située sur la bielle 36. Ainsi, une rotation de l'engrenage 20 entraîne le déplacement simultané du premier volet 18 et de la bielle 36. Le moyen de liaison 40 tel qu'illustré à la figure 2 correspond à une plaque 44 solidaire de la bielle 36 comprenant un trou dans lequel est introduit un pion agencé sur une paroi du deuxième volet 28. L'engrenage 20 en entraînant la translation du premier volet 18 et de la bielle 36, provoque le déplacement de la bielle 36 et donc de la plaque 44 percée, et par ce même mouvement, le pion ainsi que le deuxième volet 28. Le dispositif 2 selon l'invention est particulièrement avantageux puisqu'il permet de déplacer les deux volets 18, 28 avec un seul actionneur pour le mono-zone, celui faisant pivoter l'engrenage 20.

Selon le positionnement du deuxième volet 28, le flux d'air froid issu du deuxième échangeur de chaleur 8 est orienté, dans des proportions variables, vers le premier échangeur de chaleur 6 et/ou directement vers la deuxième zone de mixage 22. Selon la configuration telle que illustrée à la figure 1, le flux d'air froid est entièrement orienté vers le premier échangeur de chaleur 6 puis vers la deuxième zone de mixage 22. Tel qu'illustré sur la figure 1, lesdits premier et deuxième volets 18, 28 sont agencés en amont, par rapport à la direction de l'écoulement du flux d'air, du premier l'échangeur de chaleur 6, et en aval du second échangeur de chaleur 8. Il est possible d'envisager, selon un mode de réalisation non représenté, que les premier et deuxième volets 18, 28 soient en aval du premier échangeur de chaleur 6. Un tel dispositif est donc adapté pour un traitement thermique mono-zone ou bi-zone où les différentes zones du véhicule sont aérées à une même température avec un encombrement stérique et une cinématique acceptables à un coût moindre.

Comme vu précédemment, le dispositif 2 de chauffage, ventilation et/ou climatisation selon l'invention, et tel qu'illustré à la figure 2, comprend deux zones de mixage 15, 22, chacune étant apte à recevoir un flux d'air ayant traversé le premier échangeur de chaleur 6. Pour garantir que chaque zone de mixage 15, 22 reçoit la quantité appropriée de flux d'air chaud, le dispositif 2 comprend un élément de séparation 30 permettant de séparer le flux d'air issu du deuxième échangeur de chaleur 8 en deux flux d'air distincts, chacun étant destiné à être orienté vers une zone de mixage spécifique 15, 22. L'élément de séparation 30 tel qu'illustré à la figure 2, correspond à ensemble de parois reliées entre elles formant ainsi un polygone creux. Toutefois, une unique paroi suffit pour remplir cette fonction.

L'élément de séparation 30 comprend des moyens de réceptions aptes à accueillir les premier et deuxième volets 18, 28. Ces moyens de réceptions correspondent ici, à une paroi incurvée contre laquelle le premier volet 18 vient s'appuyer et une paroi plane contre laquelle le deuxième volet 28 peut venir prendre appui. Bien sur, il est possible d'envisager d'autres moyens de réceptions tels qu'une butée surmoulée sur une paroi plane par exemple.

L'élément de séparation 30 sépare le flux d'air issu du deuxième échangeur de chaleur 8 en deux flux d'air distincts. Chaque flux d'air a la possibilité de traverser une partie du premier échangeur de chaleur 6 par l'intermédiaire des couloirs 19, 29 et/ou un chemin de contournement 16, 26 pour aboutir à la chambre de mixage 15, 22 respective, et ce, dans les proportions adéquates pour garantir les mêmes températures de consigne.

Afin de garantir la dépendance ou l'indépendance des deux chambres de mixage 15, 22 un volet 32 est agencé entre les deux chambres de mixage 15, 22 pouvant ainsi soit les réunir, soit isoler l'une de l'autre. Ici, il est donc plus avantageux d'avoir les chambres de mixage 15, 22 dépendantes en raison du mode mono-zone ou à double nappes (couramment appelé double-layer en anglais) et de garder le volet 32 en position dite « ouverte » tel qu'illustré à la figure 2.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toute combinaison des différents modes de réalisation décrits précédemment.

Le mécanisme de synchronisation, selon des modes de réalisations non illustrés, peut par exemple correspondre à un ensemble de bras reliés entre eux par des points d'articulations ou à un ressort agencé entre les deux volets.

En particulier, le dispositif 2 de chauffage, ventilation et/ou climatisation selon l'invention peut comprendre des volets agencé dans les conduits 10, 12, 14 permettant de bloquer l'accès des flux d'air aux différentes buses débouchant dans l'habitacle. Le dispositif 2 peut également comprendre un système d'évacuation des condensats générés au niveau de l'évaporateur, ou un filtre à particules en amont du deuxième échangeur de chaleur 8, ou encore un chemin de contournement du deuxième échangeur de chaleur 8, selon des modes de réalisation non illustrés.

L'élément de séparation 30 est agencé en amont du premier échangeur de chaleur 6 et est situé entre les extrémités du premier échangeur de chaleur 6, il peut par exemple être situé au milieu de la hauteur du premier échangeur de chaleur 6 de manière à ce que la section du couloir 19 soit égale à celle du couloir 29. L'élément de séparation peut également être localisé de manière à ce que la section du couloir 19 soit supérieure à la celle du couloir 29 tel qu'illustré sur la figure 1 ou inversement.

De même, selon un mode de réalisation non illustrée, le mécanisme de synchronisation 34 peut être assujetti, de par une complémentarité de forme, à l'élément de séparation 30 afin de moins perturber l'écoulement du flux d'air.

Le dispositif 2 de chauffage, ventilation et/ou climatisation selon l'invention est adapté pour toute architecture de boîtier connue à savoir centrée ou semi-centrée. Une architecture centrée correspond à un dispositif de chauffage, ventilation et/ou climatisation dont le boîtier d'entrée d'air (partie du boîtier comprenant le pulseur) et le boîtier principal (partie du boîtier comprenant les échangeurs de chaleur) sont agencés dans un même plan longitudinal. Une architecture semi-centrée correspond à un dispositif de chauffage, ventilation et/ou climatisation dont le boîtier d'entrée d'air et le boîtier principal ne sont pas agencés dans un même plan longitudinal, le boîtier d'entrée d'air étant agencé latéralement par rapport au boîtier principal.

De par l'agencement combiné du premier volet 18 et du deuxième volet 28, les premier et deuxième échangeurs de chaleurs 6, 8 sont agencés de manière sensiblement parallèle permettant ainsi de réduire le volume du dispositif 2 de chauffage, ventilation et/ou climatisation. Toutefois les échangeurs de chaleurs 6,8 peuvent être légèrement inclinés de manière à former un V. Les premier et deuxième chemins de contournement 16, 26 sont agencés de part et d'autre du premier échangeur de chaleur 6.

## Revendications

1. Dispositif (2) de chauffage, ventilation et/ou climatisation pour véhicule automobile, comprenant un boîtier (4) comprenant:
- un premier échangeur de chaleur (6),
- un canal (3) d'écoulement d'un flux d'air où est agencé le premier échangeur de chaleur (6),
- un premier chemin de contournement (16) du premier échangeur de chaleur (6),
- un premier volet (18) et un deuxième volet (28) obstruant au moins partiellement le canal (3) d'écoulement du flux d'air, lesdits volets (18, 28) étant situés à proximité du premier échangeur de chaleur (6),
le premier volet (18) étant de type coulissant tandis que le deuxième volet (28) est d'un type différent dudit premier volet (18), le deuxième volet (28) étant de type tambour,
le dispositif (2) comprenant un mécanisme de synchronisation (34) desdits volets (18, 28) logé à l'intérieur du boîtier (4),
un deuxième échangeur de chaleur (8) étant agencé en amont, par rapport à la direction d'écoulement du flux d'air, du premier échangeur de chaleur, le dispositif comprenant un second chemin de contournement (26) du premier échangeur de chaleur (6), le second chemin de contournement (26) étant agencé à distance du premier chemin de contournement (16),
le premier volet (18) étant disposé au niveau du premier chemin de contournement (16) et le deuxième volet (28) étant disposé au niveau du deuxième chemin de contournement (26), le dispositif comprenant un élément de séparation (30) agencé entre lesdits chemins de contournement (16, 26) du premier échangeur de chaleur (6), comprenant des moyens de réception aptes à accueillir le premier volet (18) et le deuxième volet (28),
lesdits échangeurs de chaleurs (6, 8) étant agencés de manière sensiblement parallèle, lesdits chemins de contournements (16, 26) étant agencés de part et d'autre du premier échangeur de chaleur (6).

2. Dispositif selon la revendication 1, **caractérisé en ce que** mécanisme de synchronisation (34) comprend au moins une bielle mobile (36).

## Patentansprüche

1. Vorrichtung (2) für Heizung, Belüftung und/oder Klimatisierung für ein Kraftfahrzeug, die ein Gehäuse (4) umfasst, umfassend:
- einen ersten Wärmeaustauscher (6),
- einen Strömungskanal (3) für einen Luftstrom, wo der erste Wärmeaustauscher (6) angeordnet ist,
- einen ersten Umgehungspfad (16) für den ersten Wärmeaustauscher (6),
- eine erste Klappe (18) und eine zweite Klappe (28), die zumindest zum Teil den Strömungskanal (3) für den Luftstrom versperren, wobei sich die Klappen (18, 28) in der Nähe des ersten Wärmeaustauschers (6) befinden,
wobei die erste Klappe (18) vom Schiebetyp ist, während die zweite Klappe (28) von einem Typ, der sich von der ersten Klappe (18) unterscheidet, ist, wobei die zweite Klappe (28) vom Trommeltyp ist,
wobei die Vorrichtung (2) einen Synchronisationsmechanismus (34) für die Klappen (18, 28) umfasst, der im Inneren des Gehäuses (4) untergebracht ist,
wobei ein zweiter Wärmeaustauscher (8) stromaufwärts, in der Strömungsrichtung des Luftstroms, des ersten Wärmeaustauschers angeordnet ist, wobei die Vorrichtung einen zweiten Umgehungspfad (26) für den ersten Wärmeaustauscher (6) umfasst, wobei der zweite Umgehungspfad (26) in einem Abstand zum ersten Umgehungspfad (16) angeordnet ist,
wobei die erste Klappe (18) bei dem ersten Umgehungspfad (16) angeordnet ist und die zweite Klappe (28) bei dem zweiten Umgehungspfad (26) angeordnet ist, wobei die Vorrichtung ein Trennungselement (30) umfasst, das zwischen den Umgehungspfaden (16, 26) für den ersten Wärmetauscher (6) angeordnet ist und Aufnahmemittel umfasst, die die erste Klappe (18) und die zweite Klappe (28) aufnehmen können,
wobei die Wärmeaustauscher (6, 8) im Wesentlichen parallel angeordnet sind, wobei die Umgehungspfade (16, 26) beidseits des ersten Wärmeaustauschers (6) angeordnet sind.

2. Vorrichtung nach Anspruch 1, **dadurch gekennzeichnet, dass** der Synchronisationsmechanismus (34) mindestens eine bewegliche Kolbenstange (36) umfasst.

## Claims

1. Heating, ventilation and/or air-conditioning device (2) for a motor vehicle, comprising a housing (4) comprising:
- a first heat exchanger (6),
- a flow duct (3) for a flow of air, where the first heat exchanger (6) is arranged,
- a first bypass path (16) for bypassing the first heat exchanger (6),
- a first flap (18) and a second flap (28) that at least partially obstruct the flow duct (3) for the flow of air, said flaps (18, 28) being located close to the first heat exchanger (6),
the first flap (18) being of the sliding type whereas the second flap (28) is of a type different from said first flap (18), the second flap (28) being of the drum type, the device (2) comprising a synchronization mechanism (34) for synchronising said flaps (18, 28), this mechanism being housed inside the housing (4),
a second heat exchanger (8) being arranged upstream, with respect to the flow direction of the flow of air, of the first heat exchanger, the device comprising a second bypass path (26) for bypassing the first heat exchanger (6), the second bypass path (26) being arranged at a distance from the first bypass path (16),
the first flap (18) being arranged at the first bypass path (16) and the second flap (28) being arranged at the second bypass path (26), the device comprising a separation element (30) arranged between said bypass paths (16, 26) of the first heat exchanger (6), comprising receiving means that are able to accommodate the first flap (18) and the second flap (28),
said heat exchangers (6, 8) being arranged essentially in parallel, said bypass paths (16, 26) being arranged on either side of the first heat exchanger (6).

2. Device according to Claim 1, **characterized in that** the synchronization mechanism (34) comprises at least one mobile connecting rod (36).
